# EUROPEAN PATENT APPLICATION

(11) **EP 4 593 341 A1**
(43) Date of publication of application: **30.07.2025**
(21) Application number: 24153479.1
(22) Date of filing: 23.01.2024
(51) Int. Cl.: H04L 41/0663, H04L 41/22, H04L 41/12, H04L 12/437, H04L 12/40

(54) **DIAGNOSTICS FOR PROCESS CONTROL SYSTEMS**

(71) Applicant: ABB SCHWEIZ AG, 5400 Baden (CH)
(72) Inventor: POOK, Stefan, 32423 Minden (DE); KEUL, Thomas, 63579 Freigericht (DE); JESKE, Ralf, 32469 Petershagen (DE); WAHLMANN, Andreas, 31715 Meerbeck (DE); SCHNEIDER, Rudy, Westlake, 44145 (US); PAULS, Sergej, 33818 Leopoldshöhe (DE)
(74) Representative: Maiwald GmbH

(57) **Abstract**

There is provided a diagnostics method for a process control system. The process control system is configured to communicate with at least one network device via a network. The process control system comprises a first component and a second component. The method comprises running diagnostics on the network to determine whether a network fault renders the first component essential for the second component to connect to the at least one network device.

## Description

### FIELD OF THE INVENTION

The invention relates to diagnostics systems and methods for process control systems.

### BACKGROUND

In today's process control systems, redundancy protocols are used in which component roles are clearly defined as "primary" or "backup". It is acceptable to take a backup component out of operation without affecting the primary component. When the primary component is taken out of operation, the backup component becomes the new primary and takes over the work. It is always safe to take the backup component out of operation to carry out maintenance, reconfiguration, or upgrades.

### SUMMARY

As topologies of process control systems become more complex, a more intelligent and flexible approach is desirable for taking components out of operation without compromising the automation function in case faults are active. To better address one or more of these concerns, there is provided, in a first aspect of invention, a diagnostics method for a process control system, wherein the process control system is configured to communicate with at least one network device via a network, wherein the process control system comprises a first component and a second component, the method comprising running diagnostics on the network to determine whether a network fault renders the first component essential for the second component to connect to the at least one network device.

In this way, the diagnostics method is able to indicate whether it is safe to take the first component out of operation. By "safe" is meant that the first component can be taken out of operation without comprising the ability of the second component to connect to the at least one field network device, without loss of availability or process function, or without otherwise compromising the automation function in view of the active network fault. While most high availability systems are tolerant to one fault, a second fault can lead to loss of availability. The diagnostics methods and systems described improve the indication of the network fault so as to reduce the risk that a second fault is added, for example during maintenance etc.

In one example, the first and second components form a set of redundant components, wherein the first component is a backup component and the second component is a primary component, and wherein the backup component serves as a backup for the primary component. In another example, the first and second components form a set of singular components which share the common network.

The first and second components may be mounted to the same mounting termination unit (MTU) or to different MTUs.

In an example, the diagnostics are operable to classify each of the first and second components as having the status "primary", "active backup", or "inactive backup". Other classifications may be used in addition to or instead of those listed herein. A primary component is one which is being actively used by the process control system for controlling a process. An active backup component is one which has become essential for the at least one primary component to connect to the at least one network device such as a field device as a result of the network fault. In contrast, an inactive backup component may be disconnected from the network without affecting the ability of the at least one primary component to connect to the at least one network device, despite the presence of the network fault.

The diagnostics may be operable to make said determination by executing a rule-based algorithm which depends on network topology and/or protocols. In an example, the rule-based algorithm evaluates the network topology - as affected by the network fault - with respect to one or more predefined topology rules for the redundancy protocol being implemented. A first step may comprise determining the presence of the network fault. A first non-limiting example of a rule states that, in the case of a ring topology with more than one controller and a network fault, it is not safe to take any controller out of operation. A second non-limiting example of a rule states that, in the case of a redundant network with a first network connected to a first controller and a second network connected to a second controller, with connectivity issues to any network device on one or both of the first and second controllers, only that controller which has connectivity issues can safely be taken out of operation. A third non-limiting example of a rule states that, for line topologies, if the neighbouring network element is a controller and more than one port is used, that controller is designated as being active.

The term "component" as used herein may comprise or relate to any controller, switch, fieldbus communication module, MTU, or other component of the automation system that might be shared, for example.

The diagnostics method may be executed by part of the process control system, e.g. by one or more of the controllers of the process control system, or it may be executed by a separate or standalone diagnostics system or module in communication with the process control system. In any case, the method may be computer implemented, as described further hereinbelow.

The diagnostics method may further comprise outputting a notification following the determination that the first component has been rendered essential and therefore cannot safely be taken out of operation. The notification may comprise the class or status assigned to the first component, i.e., primary, active backup, or inactive backup. The notification may comprise a binary indication of whether the first component can safely be taken out of operation. This may be displayed by any appropriate user interface, such as that of the first component itself, or by the UI of an engineering tool or operations desk. The binary indication may be displayed using an LED, for example. The LED may be labelled "DO NOT REMOVE", for example. The notification may comprise or be comprised in an alarm or an event.

According to a second aspect, there is provided a controller for a process control system, the controller being configured to carry out the diagnostics method of the first aspect.

According to a third aspect, there is provided a process control system configured to carry out the diagnostics method of the first aspect.

According to a fourth aspect, there is provided an industrial automation system comprising the controller of the second aspect and/or the process control system of the third aspect.

The method of the first aspect may be computer implemented. Optional features of the first aspect may form part of any of the second-fourth aspects, mutatis mutandis.

According to a fifth aspect, there is provided a computing system configured to perform the method of the first aspect.

According to a sixth aspect, there is provided a computer program (product) comprising instructions which, when executed by a computing system, enable or cause the computing system to perform the method of the first aspect.

According to a seventh aspect, there is provided a computer-readable (storage) medium comprising instructions which, when executed by a computing system, enable or cause the computing system to perform the method of the first aspect. The computer-readable medium may be transitory or non-transitory, volatile or non-volatile.

By running diagnostics to determine whether components can safely be taken out of operation, as described herein, erroneous or unintended incapacitation of components can be prevented which would otherwise interrupt communications to the process.

Diagnostics as described herein enables the achievement of high availability and may be used to drive down mean time to repair (MTTR).

As used herein, the expression "taking a component out of operation" and the like may comprise removing the component for example by physically removing the component, disconnecting the component, decommissioning the component, upgrading the component, reconfiguring the component, or otherwise degrading the functionality of the component for a period of time.

By "(process) automation system" is meant an industrial plant or production plant comprising one or more pipelines, production lines, and/or assembly lines for transforming one or more educts into a product and/or for assembling one or more components into a final product.

As used herein, the term "network device" pertains to any device which can be connected to a network, such as a network switch, a controller, a remote I/O, a field device, or an engineering tool, for example.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

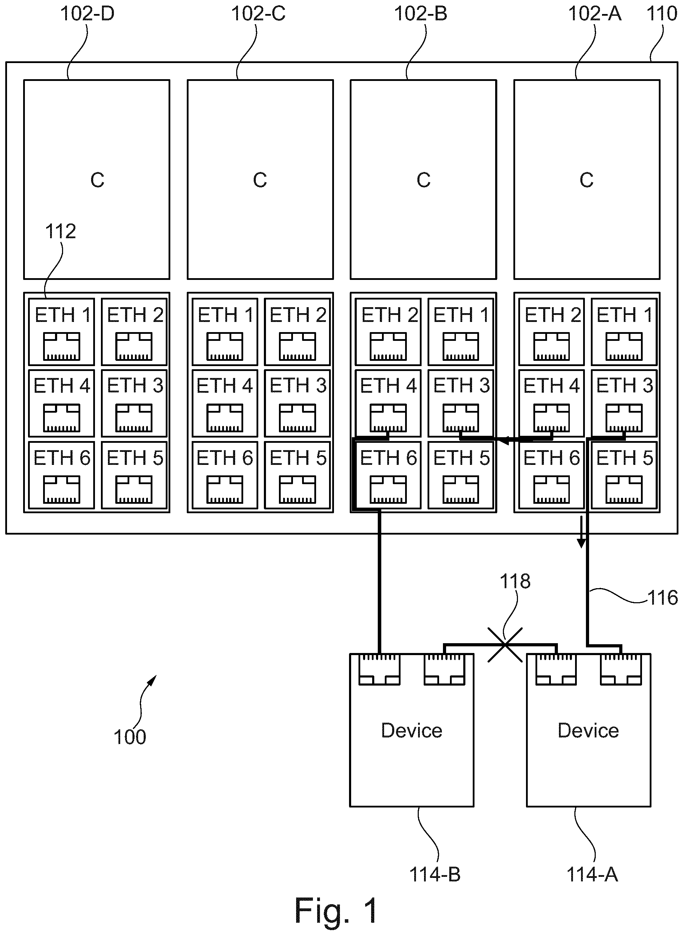

A detailed description will now be given, by way of example only, with reference to the accompanying drawings, in which:-
FIGS. 1-3 illustrate controllers of a process control system connected to field devices of an automation system via networks exhibiting various different topologies.

### DETAILED DESCRIPTION

FIGS. 1-3 illustrate a process control system 100 for controlling an industrial process carried out by an automation system (not shown). The process control system 100 comprises multiple controllers 102-A, 102-B, 102-C, 102-D, collectively referred to as controllers 102, which are physically and communicatively coupled to one another via a mounting termination unit (MTU) 110, commonly known as a backplane. The controllers 102 are configured to communicate with other components of the automation system, that is network devices such as field devices 114-A and 114-B, collectively referred to as field devices 114, or an engineering tool as described herein. The engineering tool (typically implemented as a software package) is used to create configuration data for the process control system 100, which can be downloaded to the controllers 102. For the purposes of such communication, the controllers 102 are provided with ethernet ports, such as that illustrated at 112, together with associated communications interface circuitry. Each of the controllers 102 furthermore comprises its own network switch. The mounting termination unit 110 may further comprise circuitry (not shown) for powering the controllers 102 and/or for accommodating a power module.

Each of the controllers 102 is configured to control a respective process carried out by the automation system (not shown). The process control system 100 may find application in any field of industry where process automation is desired, such as energy, oil and gas, chemical, petrochemical, and so on. The controllers 102 handle process control and monitoring for the automation system by receiving input signals from sensors and instruments, and outputting control signals for controlling plant equipment such as pumps, valves, conveyors, mixers, and heaters. Any such sensor, instrument or plant equipment may form part of one or more of the field devices 114. The controllers 102 are configured to execute process control applications to generate the control signals on the basis of the input signals. Each control application may comprise control logic instructing the respective controller how to respond to all input signals with appropriate control signals to maintain normal functioning of the process. In one non-limiting example, the control application conforms to the international standard IEC 61131. Each of the controllers 102 comprises logic circuitry configured to execute the respective control application. The logic circuitry may comprise a CPU, MCU, SoC, FPGA, DSP, and/or an Al-engine, together with any memory to be used in the processing of signals. The logic circuitry may be further configured to perform any one or more of the other operations described herein.

The inventors have recognised that, in such process control systems 100 that include various network equipment (e.g. switches), it is useful to indicate whether it is "safe" to take components out of operation or not. Even though one of the controllers 102 may be acting as backup, its presence might be essential for the controller 102 that is serving as primary to access other network equipment, such that it is unsafe to take the backup controller out of operation. A typical use case is an open network ring, where some field devices are connected only via the primary controller and others are connected only via the backup controller.

To that end, there is provided a diagnostics method for a process control system, the method comprising running diagnostics on the network to determine whether a network fault renders a backup component essential for a primary component to connect to a field device. In particular, the diagnostics label the components as having the status "(active) primary", "active backup", or "inactive backup". Taking an "active" component (active primary or active backup) out of operation always has a detrimental effect on the system 100 (e.g. via loss of fieldbus capacity) and, dependent on the nature of the network fault, could lead to loss of process control.

Any of the controllers 102 may run the diagnostics, regardless of whether that controller is a "single" component or acting as "primary" or "backup" in a redundant pair.

In a first stage, diagnostics are run on the network to determine whether there is a network fault. The tests run are dependent on the network topology and redundancy protocol used. In various non-limiting examples:-
- For ring topologies with Media Redundancy Protocol (MRP), the state of the ring is evaluated using the MRP test frames. If the ring is not intact, the presence of a network fault is determined.
- For ring topologies with High-availability Seamless Redundancy (HSR), the state of the ring is evaluated using the HSR supervision frames. Again, a compromised ring indicates the presence of a network fault.
- For independent redundant networks with Parallel Redundancy Protocol (PRP), the supervision frames are evaluated for both networks, to determine whether both are available. An unavailable network indicates the presence of a network fault.
- For line topologies, neighbouring network elements are evaluated using the Link Layer Discovery Protocol (LLDP). The unavailability of a neighbouring element indicates the presence of a network fault.

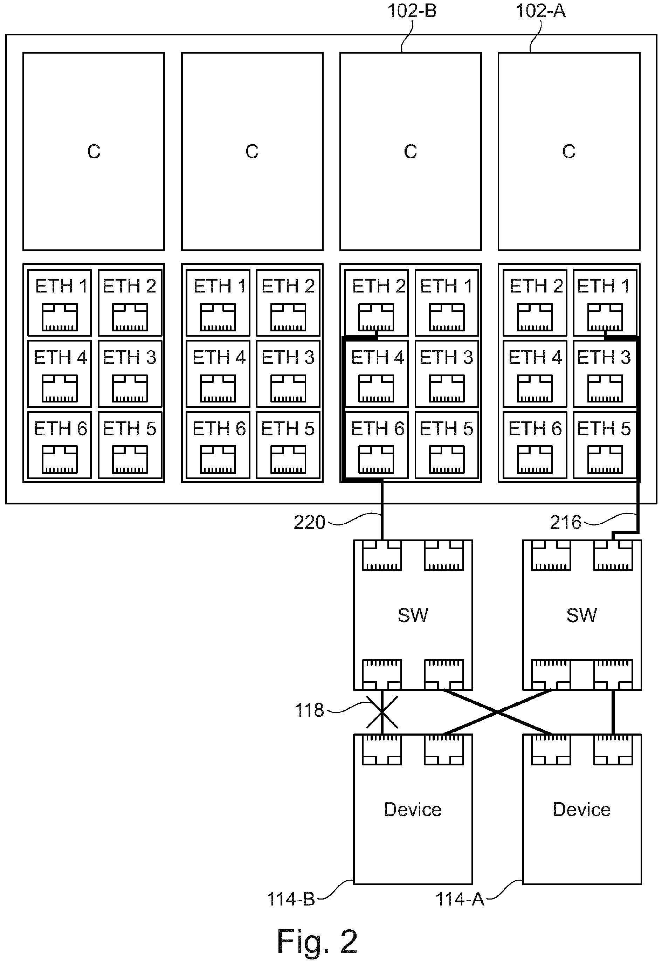

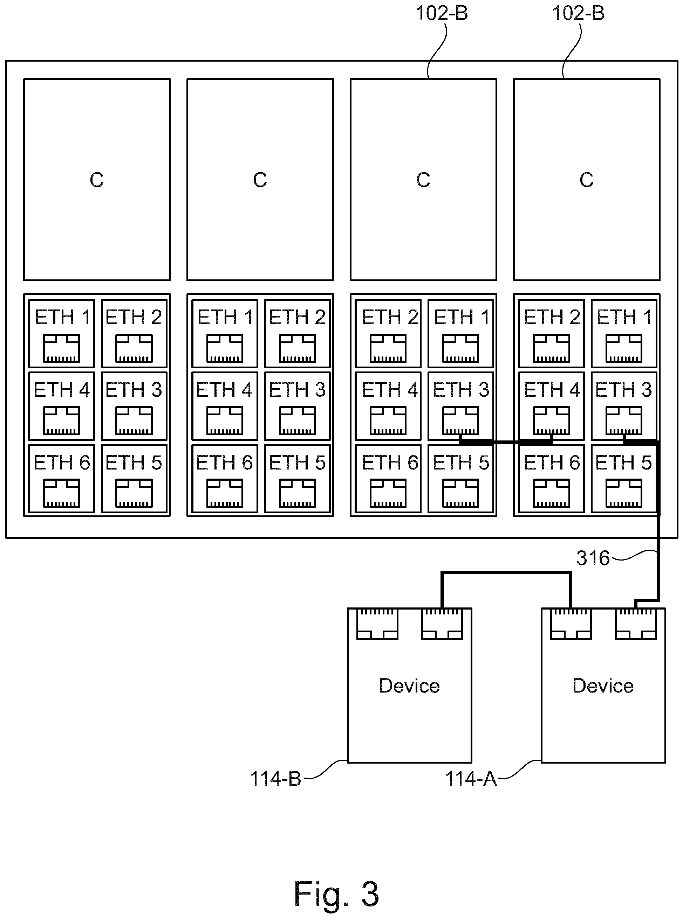

The state of the network is evaluated against predefined topology rules to determine whether components can safely be taken out of operation. In various non-limiting examples:-
- In the case of a ring topology with more than one controller and a network fault, it is not safe to take any controller out of operation (discussed further below with reference to FIG. 1). This rule is applicable independently of the ring protocol.
- In the case of a redundant network with a first network connected to a first controller 102 and a second network connected to a second controller 102, with connectivity issues to any field device 114 on one or both controllers 102, only that controller which has connectivity issues can safely be taken of operation (discussed further below with reference to FIG. 2).
- For line topologies, if the neighbouring network element is a controller and more than one port is used, the controller is designated as being active (discussed further below with reference to FIG. 3).

Following application of the topology rules, in view of the present network fault, a classification can be assigned to represent the current state of the controller. In the non-limiting example described herein, the controller may be designated as "active primary", "active backup", or "inactive backup". Taking an "active" component out of operation always has a detrimental effect on the system 100 and, depending on the nature of the network fault, could lead to a loss of process control.

FIG. 1 illustrates the process control system 100 using a network 116 which exhibits a ring topology to connect to the two field devices 114. A network fault 118 results in a broken connection between field device 114-A and field device 114-B. In this case, controller 102-A, acting as the primary, remains able to communicate with field device 114-A but can communicate with field device 114-B only via controller 102-B, serving as backup. Thus, taking controller 102-B out of operation would compromise the system. In this case, controller 102-A may be designated as "primary" and controller 102-B as "active backup".

FIG. 2 illustrates controller 102-A using a main network 216 to connect to the two field devices 114 while controller 102-B uses a redundant network 220 for the same purpose. The network fault 118 compromises the ability of controller 102-B to connect to field device 114-B. If controller 102-B was initially the primary, controller 102-A, which became primary because of the network fault, cannot safely be taken out of operation. If controller 102-A was initially the primary, controller 102-B can safely be taken out of operation as an inactive backup.

FIG. 3 illustrates controllers 102-A and 102-B connected to field devices 114-A and 114-B via a network 316 which exhibits a line topology. In this case, it is clear that controller 102-A cannot be taken out of operation without comprising the ability of controller 102-B to communicate with the field devices 114, that is, it cannot be taken out of operation "safely".

The state of the controller 102 as determined using the method described herein is indicated to the user in an HMI. This can be an alarm, an event in a list, a status in the UI or simply an LED. Based on the indication, the user is readily able to judge whether it is safe to take the component out of operation or whether doing so may cause loss of process control.

To learn about the scenario that caused the component to become active, the user can connect a tool (such as the engineering tool referred to herein) and read out further information. This can then be used to determine what must be repaired before the component can be taken out of operation safely.

It will be understood that, although the specific examples described herein relate to ethernet-based fieldbuses together with their associated network topology and/or a redundancy protocols, the methods and systems are equivalently applicable to non- ethernet-based fieldbuses.

Any unit, module, circuitry or methodology described herein may be implemented using hardware, software, and/or firmware configured to perform any of the operations described herein. Hardware may comprise one or more processor cores, fieldprogrammable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A diagnostics method for a process control system, wherein the process control system is configured to communicate with at least one network device via a network, wherein the process control system comprises a first component and a second component, the method comprising running diagnostics on the network to determine whether a network fault renders the first component essential for the second component to connect to the at least one network device.

2. The method of claim 1, wherein the diagnostics are operable to classify each of the first and second components as having the status "primary", "active backup", or "inactive backup".

3. The method of claim 1 or 2, wherein the diagnostics are operable to make said determination by executing a rule-based algorithm which depends on a network topology and/or a redundancy protocol used.

4. The method of claim 3, wherein the rule-based algorithm evaluates network topology as affected by the network fault with respect to one or more predefined topology rules for a redundancy protocol being implemented.

5. The method of claim 3 or 4, comprising first determining the presence of the network fault.

6. The method of any of claims 3-5, wherein a rule states that, in the case of a ring topology with more than one controller and a network fault, it is not safe to take any controller out of operation.

7. The method of any of claims 3-6, wherein a rule states that, in the case of a redundant network with a first network connected to a first controller and a second network connected to a second controller, with connectivity issues to any network device on one or both of the first and second controllers, only the controller which has connectivity issues can safely be taken out of operation.

8. The method of any of claims 3-7, wherein a rule states that, for line topologies, if the neighbouring network element is a controller and more than one port is used, that controller is unsafe to take out of operation.

9. The method of any preceding claim, further comprising outputting a notification following the determination that the first component has been rendered essential and therefore cannot safely be taken out of operation.

10. The method of claim 9, further comprising displaying the notification on a user interface.

11. A controller for a process control system, the controller being configured to carry out the method of any of claims 1-10.

12. A process control system configured to carry out the diagnostics method of any of claims 1-10.

13. An industrial automation system comprising the controller of claim 11 and/or the process control system of claim 12.

14. A computer-readable medium comprising instructions which, when executed by a computing system, cause the computing system to perform the method of any of claims 1-10.
